(19) Europäisches Patentamt
European Patent Office
Office européen des brevets

(11) **EP 2 361 954 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(51) Int Cl.:
*C09C 1/48* *(2006.01)*     *B29K 7/00* *(2006.01)*
*B29K 9/00* *(2006.01)*     *B60C 1/00* *(2006.01)*
*C09C 1/50* *(2006.01)*

(21) Anmeldenummer: **11154839.2**

(22) Anmeldetag: **17.02.2011**

(54) **Ruß, Verfahren zu seiner Herstellung und seine Verwendung**

Carbon black, method for the production thereof, and use thereof

Rouille, son procédé de fabrication et d'utilisation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2010 DE 102010002244**

(43) Veröffentlichungstag der Anmeldung:
**31.08.2011 Patentblatt 2011/35**

(73) Patentinhaber: **Orion Engineered Carbons GmbH 60528 Frankfurt am Main (DE)**

(72) Erfinder:
• **Schinkel, Arndt-Peter, Dr.**
  **56269 Marienhausen (DE)**
• **Stanyschöfsky, Michael**
  **50354 Hürth (DE)**
• **Vogler, Conny, Dr.**
  **53809 Ruppichteroth (DE)**
• **Fröhlich, Joachim, Dr.**
  **92318 Neumarkt (DE)**
• **Schwaiger, Bernhard**
  **50374 Erftstadt (DE)**
• **Pelster, Thomas, Dr.**
  **50321 Brühl (DE)**

(74) Vertreter: **f & e patent**
  **Fleischer, Engels & Partner mbB, Patentanwälte**
  **Braunsberger Feld 29**
  **51429 Bergisch Gladbach (DE)**

(56) Entgegenhaltungen:
**WO-A1-2010/043562     DE-A1- 4 308 488**
**DE-A1- 19 839 925**

• **Wesley Wampler: "Improved Test for Determination of Carbon Black Structure", , 15. November 2004 (2004-11-15), XP002637916, Gefunden im Internet: URL:http://www.sidrich.com/PDF/Papers/Paper200411.pdf [gefunden am 2011-05-19]**

**Beschreibung**

Die Erfindung betrifft einen Ruß, ein Verfahren zu seiner Herstellung sowie seine Verwendung.

Es ist bekannt (Donnet J.-B., Bansal R. C., Wang M.J. (Hrsg.), Gersbacher M: Carbon Black, Marcel Dekker Inc., New York, (1993), Aufl. 2, S. 386), dass die Struktur des Rußes einen erheblichen Einfluss auf das Verstärkungsverhalten von Ruß in Gummimischungen aufweist, eine gute Anhaftung des Polymers an den Ruß vorausgesetzt. Weiterhin ist allgemein bekannt, dass mit steigender spezifischer Oberfläche die Hysterese und damit die Energiedissipation bei einer periodischen Kraft-DehnungsBeanspruchung zunimmt. Die Abriebsbeständigkeit nimmt mit steigender spezifischer Oberfläche zu. Der Druckverformungsrest ist umso größer, je größer die spezifische Oberfläche ist, was insbesondere für Dichtungen ungünstig ist, da hiermit eine Verringerung der Anpresskraft der Dichtung einhergeht. Aus diesem Grunde werden insbesondere für technische Gummiwaren, für die die Abriebsbeständigkeit nicht im Vordergrund steht, niederoberflächige Ruße eingesetzt. Ebenfalls können diese Ruße im Bereich des Reifenunterbaus eingesetzt werden. Die geringere spezifische Oberfläche der Ruße führt somit zu einer Absenkung der Hysterese und damit auch zu einer Verringerung des Rollwiderstandes. Wie schon erwähnt wird die Verstärkung maßgeblich von der Struktur beeinflusst. Ein höherer Rollwiderstand, verursacht durch den Reifenunterbau, bedingt einen höheren Kraftstoffverbrauch und damit höheren Kohlendioxidausstoß. Dies ist aus ökonomischen und ökologischen Gesichtspunkten unerwünscht.

Weiterhin ist bekannt (Donnet, Bansal, Wang (Hrsg.), Funt J.M, Sifleet W.L., Tomme M.: Carbon Black, Marcel Dekker Inc., New York, (1993), Aufl. 2, S. 390), dass eine gute Dispergierung des Rußes im Polymer erzielt wird, wenn die Struktur (COAN, OAN) hinreichend groß ist.

Aus ökonomischen und ökologischen Gesichtspunkten ist es daher erwünscht, durch eine niedrige spezifische Oberfläche den Rollwiderstand des Reifenunterbaus abzusenken. Weiterhin wäre es wünschenswert das Bauteilgewicht abzusenken, wenn durch eine verbesserte Verstärkungswirkung der Füllstoffanteil und somit die Bauteildichte verringert werden kann. Aus ökonomischer und prozesstechnischer Sicht wäre es wünschenswert, wenn, bedingt durch eine verbesserte Verstärkungswirkung des Füllstoffs, in der Gummirezeptur Polymeranteile durch Öl substituiert werden könnten. Für die Wirksamkeit des Füllstoffs ist weiterhin die Dispergierung wesentlich, so dass ein einfach zu dispergierender Füllstoff erwünscht ist.

Aus US 2008/0110552 A1 ist ein Ruß bekannt mit einer COAN größer 90 ml/(100 g) und kleiner 150 ml/(100 g) und einer BET größer 50 $m^2$/g und kleiner 69 $m^2$/g. Der Verteilungsindex DI, der sich aus dem Quotienten $D_w$ zu $D_{mode}$ ergibt, ist größer als 1,15. Diese Ruße führen in der Gummimischung aufgrund der noch hohen spezifischen Oberfläche zu einem noch nicht optimalen Hystereseniveau.

Aus US 2003/0013797 A1 ist ein Ruß mit einer STSA von 10 bis 200 $m^2$/g , einer Jod-Zahl von 15 bis 250 mg/g, einem Tint von bis zu 130 %, einer DBPA von 20 bis 450 ml/(100 g), einer CDBP von 20 bis 400 ml/(100 g), ein Verhältnis der Jod-Zahl zur STSA von 0,4 bis 2,5, einen mittlere Partikelgröße von 14 bis 250 nm und einen Anteil an Flüchtigen Bestandteilen von weniger als 1% in einer Polymerleitfähigkeitsanwendung bekannt.

Ferner sind aus US 005236992 A Furnace-Ruße bekannt, die sich durch eine spezifische CTAB-Oberfläche von 45-55 $m^2$/g, eine spezifische Jodzahl von 48-58 mg/g, einen Tint von 65-75 %, eine CDBP von 90-100 ml/(100 g) und eine DBP von 122-132 ml/(100 g) auszeichnen. Hergestellt wird dieser Ruß durch die radiale und axiale Zugabe des Öles in der Engstelle des Furnace-Ruß-Reaktors.

Nachteilig sind an diesen Rußen das geringe OAN-Niveau und die geringe Differenz zwischen der OAN und der COAN. Weiterhin weist dieser Ruß eine immer noch hohe spezifische Oberfläche mit den damit verbundenen Nachteilen auf.

Weiterhin ist aus JP11-302557 A ein Ruß bekannt, der eine CTAB Oberfläche von 25-60 $m^2$/g und eine DBP/(ml/100 g) > 0,6*CTAB/($m^2$/g) +120 aufweist. Weiterhin wird für den Mode ein Stokesdurchmesser gemäß

$$D_{st} / nm < 6000 \ m^2 / g / CTAB + 60$$

gefordert. Aus diesem Zusammenhang ergibt sich, dass die in JP11-302557 A hergestellten Ruße relativ kleine Aggregate aufweisen.

Diese führen zu einem nicht optimalen Eigenschaftsbild des Rußes.

Aus JP07-268148 ist ein Ruß bekannt, der eine DBP größer 140 ml/(100 g) aufweist. Die angegebene Teilchengröße wird mit $d_p$ = 38 nm bzw. 42 nm angegeben.

Aus JP04-18438 ist ein Ruß bekannt mit einer STSA < 60 $m^2$/g und einer DBP ≤ 100 ml/(100 g).

In JP01-272645 wird bevorzugt ein Ruß mit einer Jodzahl von 10-40 ml/g und einer DBP von 100-500 ml/(100 g) eingesetzt.

Aus EP 1783178 ist ein Furnacerußverfahren bekannt, bei dem ein Rußrohstoff an einer ersten Stufe zugeführt und mit einem Strom heißer Gase vereinigt wird um einen Präkursor, im Wesentlichen bestehend aus einem Ruß, in einem Reaktionsstrom zu formen und nachfolgend weiterer Rußrohstoff zu diesem Präkursor zugeführt wird, um den Reaktionsstrom damit partiell abzuschrecken und anschließend den gesamten Reaktionsstrom komplett abzuschrecken. Der Strom heißer Gase kann als Verbrennungsgas aus der Reaktion eines Brennstoffes mit einem oxidativen Medium, zum Beispiel Luft, entstehen, wobei das Verhältnis von Luft zu Brennstoff von 1:1 (stöchiometrisch) bis unendlich variiert werden kann.

DE-A 198 39 925 betrifft verbesserte Inversionsruße und ein Verfahren zu ihrer Herstellung.

DE-A 43 08 488 offenbart Ruß/Kautschukzusammensetzungen 100 Gewichtsteile eines Kautschuks und 40 bis 200 Gewichtsteile eines speziellen Rußes, wobei die Zusammensetzung ein steilers tan delta Temperaturprofil und flacheres G*-temperaturprofil als bei Verwendung eines regulären Laufflächenrußes aufweist.

Aufgabe der vorliegenden Erfindung ist es, einen Ruß zur Verfügung zu stellen, der in Kautschukmischungen eine sehr hohe Verstärkungswirkung und eine geringe Hysterese bei guter Dispergierbarkeit aufweist.

Gegenstand der Erfindung ist ein Furnace-Ruß, welcher dadurch gekennzeichnet ist, dass die CTAB-Oberfläche 20 - 49 $m^2$/g, vorzugsweise 30 - 48 $m^2$/g, besonders bevorzugt 35 - 47 $m^2$/g, ganz besonders bevorzugt 38 - 46 $m^2$/g, die COAN größer als 90 ml/(100 g), vorzugsweise größer als 95 ml/(100 g), besonders bevorzugt größer als 98 ml/(100 g), insbesondere bevorzugt größer als 100 ml/(100 g) und die Summe aus OAN und COAN größer als 235 ml/(100 g), vorzugsweise größer als 250 ml/(100 g), besonders bevorzugt größer als 260 ml/(100 g), insbesondere bevorzugt größer als 270 ml/(100 g), sind.

Das Quartile-Ratio kann größer 1,60, vorzugsweise 1,65 - 2,50, besonders bevorzugt 1,70 - 2,50, ganz besonders bevorzugt 1,75 - 2,50, insbesondere bevorzugt 1,80 - 2,50, außerordentlich bevorzugt 1,85 - 2,45, sein.

Der Mode der Aggregatgrößenverteilung $D_{St}$ des erfindungsgemäßen Rußes kann > 6000 $m^2$nm/g / CTAB + 60 nm sein.

Der erfindungsgemäße Ruß kann geperlt sein. Besonders bevorzugt kann der Ruß nass geperlt sein.

Der erfindungsgemäße Ruß kann ein Verhältnis von ΔD-50 Wert zu Mode der Aggregatgrößenverteilung von größer 0,95, bevorzugt größer 1,0, ganz besonders bevorzugt größer oder gleich 1,05, haben.

Der erfindungsgemäße Ruß kann einen $D_w$-Wert (massenmittlerer Teilchendurchmesser) der Aggregatgrößenverteilung von größer als 200 nm haben.

Der Tint des erfindungsgemäßen Rußes kann kleiner als 120, vorzugsweise kleiner als 105, besonders bevorzugt kleiner 90, ganz besonders bevorzugt kleiner als 75, sein.

Der erfindungsgemäße Ruß kann ein Verhältnis aus dem anzahlgemittelten Durchmesser und dem Mode der Aggregatgrößenverteilung von größer als 1,35, vorzugsweise größer 1,4, haben.

Der erfindungsgemäße Ruß ist ein Furaceruß.

Der erfindungsgemäße Ruß kann eine OAN > 100 ml/(100 g), bevorzugt > 130 ml/(100 g), besonders bevorzugt > 160 ml /(100 g), haben.

Der erfindungsgemäße Ruß kann eine mittlere Primärteilchengröße größer 42 nm, bevorzugt von 43 nm bis kleiner 160 nm, besonders bevorzugt von 43 nm bis 90 nm, aufweisen.

Der erfindungsgemäße Ruß kann nicht oberflächenmodifiziert und nicht nachbehandelt sein.

Der pH-Wert des erfindungsgemäßen Rußes kann > 5 sein.

Der CTAB Wert wird nach ASTM D-3765-04 gemessen.

Die spezifische BET- und STSA-Oberfläche werden nach ASTM D-6556-04 gemessen. Hierbei werden die Parameter bezüglich des relativen Drucks gemäß Abschnitt 10.4.4. eingehalten.

Der COAN Wert wird nach ASTM D-3493-06 gemessen, mit folgenden Parametern: Oil: paraffin; method for end-point determination: procedure B.

Die OAN wird nach ASTM D 2414-00 gemessen.

Der Tint wird nach ASTM D-3265-06 gemessen, mit folgenden Parametern: Hoover Muller Paste Preparation, Erichsen-tinttester - film drawdown method.

Der pH-Wert wird nach ASTM D 1512-00 gemessen.

Die Primärteilchengröße wird nach ASTM D 3849-07 gemessen.

Das Quartile-Ratio wird aus der Aggregatgrößenverteilung berechnet.

Die Aggregatgrößenverteilung wird dabei nach der Norm ISO 15825, first edition, 2004-11-01, bestimmt, wobei folgende Modifikationen angewendet werden:

Ergänzung in Absatz 4.6.3 der Norm ISO 15825: Der Mode bezieht sich auf die Massenverteilungskurve (mass distribution curve).

Ergänzung in Absatz 5.1 der Norm ISO 15825: Es wird das Gerät BI-DCP Particle Sizer und die zugehörige Auswertesoftware dcplw32, Version 3.81, verwendet, alles erhältlich bei der Firma Brookhaven Instruments Corporation, 750 Blue Point Rd., Holtsville, NY, 11742. Ergänzung zu Absatz 5.2 der Norm ISO 15825: Es wird das Ultraschall-Steuergerät GM2200, der Schallwandler UW2200, sowie die Sonotrode DH13G verwendet. Ultraschall Steuergerät, Schallwandler und Sonotrode sind erhältlich bei der Firma Bandelin electronic GmbH & Co. KG, Heinrichstraße 3-4, D-12207 Berlin. Dabei werden am Ultraschall-Steuergerät folgende Werte eingestellt: Power % = 50, Cycle = 8.

Dies entspricht einer eingestellten Nennleistung von 100 Watt und einem eingestellten Puls von 80%.

Ergänzung zu Absatz 5.2.1 der Norm ISO 15825: Die Ultraschallzeit wird auf 4,5 Minuten festgelegt. Abweichend zu der im Absatz 6.3 der Norm ISO 15825 angegebenen Definition wird "Surfactant" wie folgt definiert: "Surfactant" ist ein anionisches Tensid vom Typ Nonidet P 40 Substitute von der Firma Fluka, erhältlich bei Sigma-Aldrich Chemie GmbH, Industriestrasse 25, CH-9471 Buchs SG, Switzerland.

Abweichend zu der im Absatz 6.5 der Norm ISO 15825 angegebenen Definition der Spinflüssigkeit ist die Spinflüssigkeit wie folgt definiert: Zur Herstellung der Spinflüssigkeit werden 0,25 g Tensid Nonidet P 40 Substitute von Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Spinflüssigkeit darf nach deren Herstellung höchstens 1 Woche verwendet werden.

Abweichend zu der im Absatz 6.6 der Norm ISO 15825 angegebenen Definition der Dispersionsflüssigkeit ist die Dispersionsflüssigkeit wie folgt definiert: Zur Herstellung der Dispersionsflüssigkeit werden 200 ml Ethanol (Absatz 6.2), und 0,5 g Tensid Nonidet P 40 Substitute von Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Dispersionsflüssigkeit darf nach deren Herstellung höchstens 1 Woche verwendet werden.

Ergänzung zu Absatz 7 der Norm ISO 15825: Es wird ausschließlich geperlter Ruß verwendet.

Die Anweisungen in den Absätzen 8.1, 8.2, 8.3 der Norm ISO 15825 werden zusammenfassend durch folgende Anweisung ersetzt: Der geperlte Ruß wird in einem Achatmörser leicht zerdrückt. 20 mg Ruß werden dann in einem 30 ml Rollrandfläschchen (Durchmesser 28 mm, Höhe 75 mm, Wanddicke 1,0 mm) mit 20 ml Dispersionslösung (Absatz 6.6) versetzt und in einem Kühlbad (16°C +/- 1°C) für die Dauer von 4,5 Minuten (Absatz 5.2.1) mit Ultraschall (Absatz 5.2) behandelt und damit in der Dispersionslösung suspendiert. Nach der Ultraschall-Behandlung wird die Probe binnen 5 Minuten in der Zentrifuge gemessen.

Ergänzung zu Absatz 9 der Norm ISO 15825: Der Wert für die einzutragende Dichte von Ruß beträgt 1,86 g/cm$^3$. Die Temperatur für die einzutragende Temperatur wird gemäß Absatz 10.11 bestimmt. Für den Typ der Spinflüssigkeit wird die Option "Aqueous" ausgewählt. Damit ergibt sich für die Dichte der Spinflüssigkeit ein Wert von 0,997 (g/cc), und für die Viskosität der Spinflüssigkeit ein Wert von 0,917 (cP). Die Lichtstreukorrektur erfolgt mit den in der Software dcplw 32 anwählbaren Optionen: Datei = carbon.prm; Mie-Correction.

Ergänzung zu Absatz 10.1 der Norm ISO 15825: Die Zentrifugengeschwindigkeit ist auf 11000 r/min festgelegt.
Ergänzung zu Absatz 10.2 der Norm ISO 15825: Anstatt 0,2 cm$^3$ Ethanol (Absatz 6.2) werden 0,85 cm$^3$ Ethanol (Absatz 6.2) injiziert.

Ergänzung zu Absatz 10.3 der Norm ISO 15825: Es werden exakt 15 cm$^3$ Spinflüssigkeit (Absatz 6.5) injiziert. Anschließend werden 0,15 cm$^3$ Ethanol (Absatz 6.2) injiziert.

Die Anweisung Absatz 10.4 der Norm ISO 15825 entfällt komplett.

Ergänzung zu Absatz 10.7 der Norm ISO 15825: Unmittelbar nach dem Start der Datenaufzeichnung überschichtet man die Spinflüssigkeit in der Zentrifuge mit 0,1 cm$^3$ Dodecan (Absatz 6.4).

Ergänzung zu Absatz 10.10 der Norm ISO 15825: Für den Fall, dass die Messkurve die Basislinie nicht binnen einer Stunde wieder erreicht, wird die Messung genau nach 1 Stunde Messdauer abgebrochen. Es erfolgt kein Neustart bei einer geänderten Zentrifugendrehzahl.

Ergänzung zu Absatz 10.11 der Norm ISO 15825: Anstelle der in der Anweisung beschriebenen Methode zur Ermittlung der Messtemperatur wird die Messtemperatur T, welche in das Computerprogramm einzutragen ist, wie folgt ermittelt:

$$T = 2/3 \ (Te - Ta) + Ta,$$

wobei Ta die Temperatur der Messkammer vor der Messung und Te die Temperatur der Messkammer nach der Messung bezeichnet. Die Temperaturdifferenz sollte 4 K nicht übersteigen.

Der ΔD-50 Wert und der Mode werden ebenfalls aus der Aggregatgößenverteilung gemäß der oben beschriebenen Norm ISO 15825 erhalten.

Ein weiterer Gegenstand der Erfindung ist ein Verfahren zur Herstellung des erfindungsgemäßen Rußes in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch Verbrennen eines Brennstoffes in einem Sauerstoff enthaltenden Gas und Leiten des Abgases von der Verbrennungszone, ohne eine Engstelle zu durchströmen, in die Reaktionszone und anschließend in die Abbruchzone, Einmischen eines Rußrohstoffes in das heiße Abgas in der Reaktionszone und Abstoppen der Rußbildung in der Abbruchzone durch Einsprühen von Wasser, welches dadurch gekennzeichnet ist, dass radial 20-58 Gew.-%, vorzugsweise 30-50 Gew.-%, des Rußrohstoffes im ersten Drittel der Reaktionszone und die restliche Menge des Rußrohstoffes stromaufwärts an mindestens einer weiteren Stelle in den Reaktor eingedüst wird.

Die Reaktionszone beginnt mit der ersten Zugabe des Rußrohstoffs und endet mit dem Quench.

Das Sauerstoff enthaltenden Gas kann Luft sein, die nicht mit Sauerstoff angereichert wird.

Der Reaktor kann sich nach der zweiten Ölzugabe erweitern. Dieses kann in mehreren Stufen oder auch in einer Stufe erfolgen. Bevorzugt ist die Verwendung nur einer Stufe. Das Querschnittsflächenverhältnis aus dem Reaktorquerschnitt der zweiten Ölzugabe und dem Reaktorquerschnitt in Strömungsrichtung dahinterliegenden Reaktionsraum kann kleiner als 1,0, bevorzugt kleiner als 0,5, besonders bevorzugt kleiner als 0,1, außerordentlich bevorzugt kleiner als 0,05, sein.

Der Brennstoff kann flüssig, teilweise flüssig und teilweise gasförmig oder gasförmig sein.

Als Brennstoff-Zerstäuber können sowohl reine Druckzerstäuber (Einstoffzerstäuber) als auch Zweistoffzerstäuber mit innerer oder äußerer Mischung eingesetzt werden. Der Brennstoff kann sowohl mit reinen Druckzerstäubern (Einstoffzerstäubern) als auch Zweistoffzerstäubern mit innerer oder äußerer Mischung eingebracht werden. Falls der Brennstoff flüssig ist, können die Bedingungen so gewählt werden, dass die bei der Zerstäubung erzielte Tropfengröße, die Verweilzeit dieser Tropfen bis zum Auftreffen auf den Rußrohstoff und die Reaktionstemperaturen so aufeinander abgestimmt werden, dass mehr als 80 % des eingesetzten Brennstoffmassenstroms beim Auftreffen auf den Rußrohstoff im gasförmigen Zustand vorliegen. Insbesondere durch die Verwendung von Zweistoffzerstäubern und flüssigem Brennstoff kann die Tropfengröße in einem weiten Bereich unabhängig vom Durchsatz kontrolliert und damit auf die Verweilzeit des Brennstoffes bis zum Auftreffen auf den Rußrohstoff und die Reaktionstemperaturen abgestimmt werden.

Die Tropfengrößenverteilung kann mit Hilfe optischer Methoden bestimmt werden. Verschiedene kommerzielle Düsenhersteller bieten diese Messungen als Dienstleistung an, zum Beispiel Düsen-Schlick GmbH, D-96253 Untersiemau/Coburg, Deutschland. Die Verweilzeit der Tropfen und die Reaktionstemperaturen im Prozess können an Hand von computergestützten strömungsmechanischen Simulationsrechnungen bestimmt werden. Zum Beispiel bietet die kommerzielle Software "Fluent", Version 6.3, der Firma Fluent (Fluent Deutschland GmbH, 64295 Darmstadt) die Möglichkeit, den verwendeten Furnacereaktor abzubilden und nach Eingabe aller zugeführten Prozessströme einschließlich der gemessenen Tropfengrößenverteilung mit Hilfe der hinterlegten chemischen Modelle die Verweilzeiten und Verdampfungsraten der Brennstofftropfen und die Reaktionstemperaturen zu berechnen.

Die Rußrohstoffe können mittels Radiallanzen eingedüst werden. Es können 2-32, vorzugsweise 3-16, besonders bevorzugt 3-8, Radiallanzen eingesetzt werden.

Der Rußrohstoff kann zu beginn der Reaktionszone axial aufgegeben werden (erste Rußrohstoffzugabe).

Der Rußrohstoff kann flüssig, gasförmig oder teilweise flüssig und teilweise gasförmig sein.

Der flüssige Rußrohstoff kann durch Druck, Dampf, Gas, beispielsweise Pressluft, oder den gasförmigen Rußrohstoff zerstäubt werden.

Als flüssiger Rußrohstoff können flüssige aliphatische oder aromatische, gesättigte oder ungesättigte Kohlenwasserstoffe, kohlenwasserstoffhaltige Verbindungen, wie flüssige Biomasse oder nachwachsende Rohstoffe, oder Mischungen hiervon, Steinkohlenteer, Destillate aus dem Steinkohlenteer oder Rückstandsöle, die beim katalytischen Cracken von Erdölfraktionen beziehungsweise bei der Olefinherstellung durch Cracken von Naphtha oder Gasöl entstehen, eingesetzt werden.

Als gasförmiger Rußrohstoff können gasförmige aliphatische, gesättigte oder ungesättigte Kohlenwasserstoffe, Mischungen hiervon oder Erdgas eingesetzt werden.

Als Messzahl zur Kennzeichnung des Luftüberschusses wird häufig der sogenannte K-Faktor verwendet. Es handelt sich bei dem K-Faktor um das Verhältnis der für eine stöchiometrische Verbrennung des Brennstoffes benötigten Luftmenge zu der tatsächlich der Verbrennung zugeführten Luftmenge. Ein K-Faktor von 1 bedeutet also eine stöchiometrische Verbrennung. Bei Luftüberschuss ist der K-Faktor kleiner 1. Bei dem erfindungsgemäßen Verfahren kann der K-Faktor zwischen 0,2 und 1,0 liegen. Bevorzugt kann der K-Faktor zwischen 0,3 und 0,9, besonders bevorzugt zwischen 0,3 und 0,8, liegen.

Das beschriebene Verfahren ist nicht auf eine bestimmte Reaktorgeometrie beschränkt. Es kann vielmehr auf verschiedene Reaktortypen und Reaktorgrößen angepasst werden.

Als Rußrohstoff-Zerstäuber können sowohl reine Druckzerstäuber (Einstoffzerstäuber) als auch Zweistoffzerstäuber mit innerer oder äußerer Mischung eingesetzt werden. Als Zerstäubungsmedium für die flüssigen Rußrohstoffe kann der gasförmige Rußrohstoff als auch Dampf und Gase, beispielsweise Luft, verwendet werden.

Es können zur Zerstäubung von flüssigem Rußrohstoff Zweistoffzerstäuber eingesetzt werden. Während bei Einstoffzerstäubern eine Änderung des Durchsatzes auch zu einer Änderung der Tröpfchengröße führen kann, kann die Tröpfchengröße bei Zweistoffzerstäubern weitgehend unabhängig vom Durchsatz beeinflusst werden.

Bei gleichzeitiger Verwendung von flüssigem Rußrohstoff und gasförmigen Rußrohstoff, wie zum Beispiel Methan, können die gasförmigen Rußrohstoffe getrennt vom flüssigen Rußrohstoff über einen eigenen Satz von Gaslanzen in den Strom des heißen Abgases injiziert werden.

Die erfindungsgemäßen Ruße können als Füllstoff, Verstärkerfüllstoff, UV-Stabilisator, Leitfähigkeitsruß oder Pigment verwendet werden. Die erfindungsgemäßen Ruße können in Kautschuk, Kunststoff, Druckfarben, Tinten, Inkjet-Tinten, Tonern, Lacken, Farben, Papier, Pasten, Batterien, Kosmetika, Bitumen, Beton, Feuerfestmaterialien und anderen Baustoffen eingesetzt werden. Die erfindungsgemäßen Ruße können als Reduktionsmittel in der Metallurgie angewendet werden.

Der erfindungsgemäße Ruß kann als Verstärkerruß in Kautschukmischungen verwendet werden.

Ein weiterer Gegenstand der Erfindung sind Kautschukmischungen, welche dadurch gekennzeichnet sind, dass sie mindestens einen Kautschuk, bevorzugt mindestens einen Dienkautschuk, besonders bevorzugt mindestens Naturkautschuk, und mindestens einen erfindungsgemäßen Ruß enthalten.

Der erfindungsgemäße Ruß kann in Mengen von 10 bis 250 phr (parts per hundred rubber), bevorzugt 20 bis 200 phr, besonders bevorzugt 30 bis 170 phr, ganz besonders bevorzugt 30 bis 150 phr, bezogen auf die Menge des eingesetzten Kautschuks, eingesetzt werden.

Die erfindungsgemäße Kautschukmischung kann Kieselsäure, vorzugsweise gefällte Kieselsäure, enthalten. Die erfindungsgemäße Kautschukmischung kann Organosilane, beispielsweise Bis(triethoxysilylpropyl)polysulfid oder (Mercaptoorganyl)alkoxysilane, enthalten.

Die erfindungsgemäße Kautschukmischung kann Kautschukhilfsmittel enthalten.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem

- Polybutadien (BR),

- Polyisopren (IR),

- Styrol/Butadien-Copolymerisate, beispielsweise Emulsions-SBR (E-SBR) oder Lösungs-SBR (L-SBR); vorzugsweise mit einem Styrolgehalt von 1 bis 60 Gew.-%, besonders bevorzugt 2 bis 50 Gew.-%, bezogen auf das Gesamtpolymer,

- Chloropren (CR),

- Isobutylen/Isopren-Copolymerisate (IIR),

- Butadien/Acrylnitril-Copolymere, vorzugsweise mit einem Acrylnitrilgehalt von 5 bis 60 Gew.-%, vorzugsweise 10 bis 50 Gew.-%, bezogen auf das Gesamtpolymer (NBR),

- teilhydrierter oder vollständig hydrierter NBR-Kautschuk (HNBR),

- Ethylen/Propylen/Dien-Copolymerisate (EPDM)

- Ethylen/Propylen-Copolymerisate (EPM) oder

- oben genannte Kautschuke, die zusätzlich funktionelle Gruppen besitzen, wie zum Beispiel Carboxy- , Silanol- oder Epoxygruppen, beispielsweise Epoxidierter NR, Carboxy-funktionalisierter NBR oder Silanol- (-SiOH) bzw. Siloxy-funktionalisierter (-Si-OR) SBR,

sowie Mischungen dieser Kautschuke.

Für die Herstellung des LKW-Reifenunterbaus kann vorzugsweise Naturkautschuk sowie dessen Mischung mit Dienkautschuken eingesetzt werden.

Für die Herstellung des PKW-Reifenunterbaus kann vorzusgweise SBR-Kautschuk sowie dessen Mischung mit anderen Dien-Kautschuken eingesetzt werden.

Die erfindungsgemäßen Kautschukmischungen können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Diphenylguanidin, Triethanolamin, Polyethylenglykol, Alkoxyterminiertes Polyethylenglykol oder Hexantriol, die der Kautschukindustrie bekannt sind.

Die Kautschukhilfsmittel können in üblichen Mengen, die sich unter anderem nach dem Verwendungszweck richten, eingesetzt werden. Übliche Mengen können zum Beispiel Mengen von 0,1 bis 50 phr bezogen auf Kautschuk sein.

Als Vernetzer können Schwefel, organische Schwefelspender Strahlung oder Radikalbildner dienen. Die erfindungsgemäßen Kautschukmischungen können darüber hinaus Vulkanisationsbeschleuniger enthalten.

Beispiele für geeignete Vulkanisationsbeschleuniger können Mercaptobenzthiazole, Sulfenamide, Guanidine, Thiurame, Dithiocarbamate, Thioharnstoffe und Thiocarbonate sein.

Die Vulkanisationsbeschleuniger und Vernetzer können in Mengen von 0,1 bis 10 phr, bevorzugt 0,1 bis 5 phr, bezogen auf Kautschuk, eingesetzt werden.

Die Abmischung der Kautschuke mit dem Füllstoff, gegebenenfalls Kautschukhilfsmitteln und gegebenenfalls den Organosilanen kann in üblichen Mischaggregaten, wie Walzen, Innenmischern und Mischextrudern, durchgeführt werden. Üblicherweise können solche Kautschukmischungen im Innenmischer hergestellt werden, wobei zunächst in einer oder mehreren aufeinanderfolgenden thermomechanischen Mischstufen die Kautschuke, der erfindungsgemäße Ruß, gegebenenfalls die Kieselsäure und gegebenenfalls die Organosilane und die Kautschukhilfsmittel bei 100 bis 170°C eingemischt werden. Dabei können sich die Zugabereihenfolge und der Zugabezeitpunkt der Einzelkomponenten entscheidend auf die erhaltenen Mischungseigenschaften auswirken. Die so erhaltene Kautschukmischung kann dann in einem Innenmischer oder auf einer Walze bei 40 - 130°C, bevorzugt 50 - 120°C, mit den Vernetzungschemikalien versetzt und zur sogenannten Rohmischung für die nachfolgenden Prozessschritte, wie zum Beispiel Formgebung und Vulkanisation, verarbeitet werden.

Die Vulkanisation der erfindungsgemäßen Kautschukmischungen kann bei Temperaturen von 80 bis 200°C, bevorzugt 130 bis 180°C, gegebenenfalls unter Druck von 10 bis 200 bar erfolgen.

Die erfindungsgemäßen Kautschukmischungen eignen sich zur Herstellung von Formkörpern, zum Beispiel für die Herstellung von Luftreifen, Reifenunterbau, Kabelmänteln, Schläuchen, Treibriemen, Förderbändern, Walzenbelägen, Reifen, Schuhsohlen, Dichtungsringen, Profilen und Dämpfungselementen.

Der erfindungsgemäße Ruß hat den Vorteil eines sehr hohen Schermoduls bei geringem Verlustmodul in Kautschukmischungen. Weiterhin zeichnet er sich dahingehend aus, dass er die Spritzquellung des Polymers stark unterdrückt. Der erfindungsgemäße Ruß zeigt eine sehr gute Dispergierbarkeit in Polymeren.

Beispiele

Beispiel 1 (Rußherstellung):

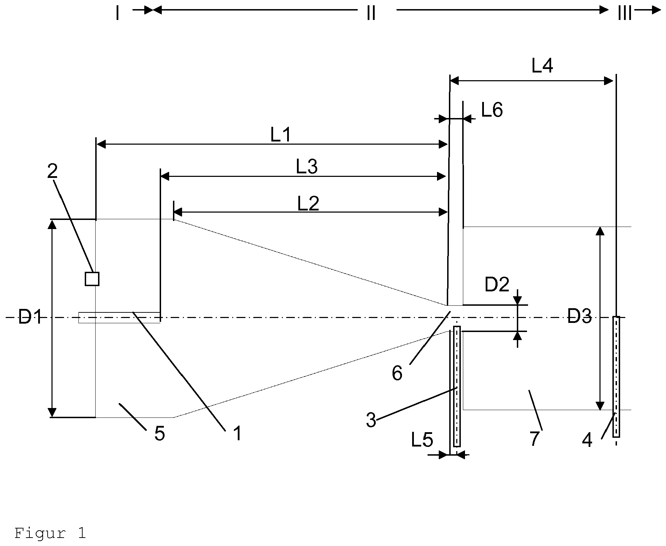

Der erfindungsgemäße Ruß wird in dem in Figur 1 dargestellten Rußreaktor hergestellt.

Figur 1 zeigt einen Längsschnitt durch den Furnacereaktor. Der Rußreaktor besitzt eine Brennkammer 5, in der das heiße Prozessgas für die Pyrolyse des Rußöles durch überstöchiometrische Verbrennen eines Brennstoffs erzeugt wird. Für die Herstellung des erfindungsgemäßen Rußes können gasförmige oder flüssige Brennstoffe verwendet werden.

Die Zufuhr der Verbrennungsluft erfolgt über mehrere Öffnungen 2, die konzentrisch zur Brennstoffaufgabe angebracht sind. Der Brennstoff wird über Brenner, die an der Stirnseite der Brennkammer montiert sind zugegeben.

Zusätzlich ist eine Öllanze 1 in die Brennkammer eingeführt über die der Rußrohstoff in den Reaktor eingebracht wird. Die Öllanze kann zur Optimierung der erfindungsgemäßen Prozessführung in axialer Richtung verschoben werden. Die Brennkammer läuft konisch auf die Engstelle 6 zu. Der Rußrohstoff wird über Radiallanzen 3 in beziehungsweise vor der Engstelle eingedüst. Nach Durchqueren der Engstelle strömt das Reaktionsgasgemisch in die Reaktionskammer 7.

Mit L3 und L5 sind verschiedene Positionen für die Injektion des Rußöls in das heiße Prozessgas mittels der Öllanzen 1 und 3 bezeichnet. Die Öllanzen sind an ihrem Kopf mit geeigneten Sprühdüsen versehen. An jeder Injektionsposition sind mindestens vier Injektoren über den Umfang des Reaktors verteilt.

In der Abbruchzone wird durch die Quenchwasserlanze 4 Wasser eingesprüht.

Verbrennungszone, Reaktionszone und Abbruchzone sind in Figur 1 durch die römischen Ziffern I bis III gekennzeichnet. Ihre exakte axiale Ausdehnung hängt von der jeweiligen Positionierung der Brennerlanze, der Öllanzen und der Quenchwasserlanze ab. Die Reaktionszone beginnt mit der ersten Zugabe des Rußrohstoffs und endet mit der Wasserzugabe bei L4.

Die Abmessungen des verwendeten Reaktors sind der folgenden Aufstellung zu entnehmen:

|  |  | I |  |
|---|---|---|---|
| Größter Durchmesser der Brennkammer D1: | | 930 | mm |
| Länge der Brennkammer bis Engstelle L1: | | 1670 | mm |
| Länge des konischen Teils der Brennkammer L2 | | 1300 | mm |
| Durchmesser der Engstelle D2: | | 114 | mm |
| Länge der Engstelle L6: | | 80 | mm |
| Durchmesser der Reaktionskammer D3: | | 875 | mm |
| Position der Öllanzen L5 | | 40 | mm |
| L3 | | 1300 | mm |
| Maximale Position der Quenchwasserlanze(n)L4 | | 8290 | mm |

Zur Herstellung der erfindungsgemäßen Ruße kann Erdgas als Brennstoff und als Rußrohstoff ein Rußöl mit einem Kohlenstoffgehalt von 91 Gew.-% und einem Wasserstoffgehalt von 6 Gew.-% eingesetzt werden.

Als Vergleichruße werden Corax® N550 und Corax® N660 erhältlich bei Evonik Degussa GmbH herangezogen.

Die Reaktorparameter für die Herstellung der erfindungsgemäßen Ruße sind in Tabelle 1 aufgeführt.

Die hergestellten Ruße werden vor der Charakterisierung und Einarbeitung in die Gummimischungen nach den üblichen Verfahren nass geperlt.Tabelle 1:

| Reaktorparameter | Einheit | |
|---|---|---|
| Verbrennungsluft | Nm$^3$/h | 1600 |
| Temperatur der Verbrennungsluft | °C | 520 |
| Brennstoff (Rußöl) | kg/h | 0 |
| Brennstoff (Erdgas) | Nm$^3$/h | 82 |
| Rußrohstoff Pos. L5 | Kg/h | 375 |
| Zerstäuberluft Pos. L3 | Nm$^3$/h | 160 |
| Rußrohstoff Pos. L3 | Kg/h | 290 |
| Rußöltemperatur | °C | 115 |
| Quenchposition L4 | mm | 8290 |

Die rußanalytischen Kenndaten der hergestellten Ruße sind in Tabelle 2 aufgeführt:

Tabelle 2:

| Analytische Kenndaten | | | | |
|---|---|---|---|---|
| Ruß | | Vergleichsruß 1 | Vergleichsruß 2 | Erfindungs gemäßer Ruß |
| | | Corax® N 550 | Corax® N 660 | Ruß 1 |
| Analytische Daten | | | | |
| | | | | |
| CTAB | m$^2$/g | - | - | 44 |
| STSA | m$^2$/g | 42 | 36 | 41 |
| OAN | cm$^3$/(100 g) | 121 | 87 | 178 |
| COAN | cm$^3$/(100 g) | 88 | 74 | 102 |
| BET | m$^2$/g | 42 | 36 | 42 |
| Tint | | 62 | 61 | 51 |
| Quartile Ratio | | 1,53 | 1, 6 | 1, 95 |
| Fraktion >150nm[1] | % | 67 | 63 | 84 |
| Mode | nm | 166 | 158 | 202 |
| ∆D-50 | nm | 126 | 130 | 218 |
| ∆D-50 / Mode | | 0,76 | 0,82 | 1,08 |
| [1] Massenanteil des Rußes mit einer Aggregatgröße größer 150 nm (bestimmt aus der Aggregatgrößenverteilung) | | | | |

Beispiel 2 (Gummitechnische Untersuchungen in Naturkautschuk):

Die für die Naturkautschukmischungen verwendete Rezeptur ist in der folgenden Tabelle 3 angegeben. Dabei bedeutet die Einheit phr Gewichtsteile, bezogen auf 100 Teile des eingesetzten Rohkautschuks.

Das allgemeine Verfahren zur Herstellung von Kautschukmischungen und deren Vulkanisate ist in dem Buch: "Rubber Technology Handbook", W. Hofmann, Hanser Verlag 1994 beschrieben.

Tabelle 3:

|  | Mischung 1 | Mischung 2 |
|---|---|---|
| Rußtyp | Vergleichsruß 1 | Ruß 1 |
|  | phr | phr |
| Stufe 1 |  |  |
| NR SMR 10 | 100,0 | 100,0 |
| Ruß | 52,0 | 52,0 |
| Stearinsäure | 3, 0 | 3, 0 |
| ZnO | 3,0 | 3,0 |
| Vulkanox® 4020 | 1,0 | 1,0 |
| Vulkanox® HS | 1,0 | 1,0 |
| Protektor® G3108 | 1,0 | 1,0 |
|  |  |  |
| Stufe 2 |  |  |
| Batch Stufe 1 |  |  |
| Schwefel | 1,5 | 1,5 |
| Rhenogran® TBBS-80 | 1,2 | 1,2 |

Bei dem Naturkautschuk SMR10 ML4 = 60-70 handelt es sich um SMR10, welcher vor dem Einmischprozess nach den üblichen Verfahren auf einem Walzwerk mastiziert wird und nach dem Mastizieren mindestens 24 Stunden, höchstens jedoch 1 Woche bei Raumtemperatur zwischengelagert wird. Der ML 1+4 (100°C)-Wert des mastizierten SMR10 liegt dabei in einem Bereich von 60-70. Der ML 1+4 - Wert wird gemessenen nach DIN 53523/3. Der Naturkautschuk ist erhältlich bei der Firma Lanxess.

Bei Vulkanox® 4020 handelt es sich um das Alterungsschutzmittel 6PPD der Firma Rhein-Chemie GmbH. Bei Vulkanox® HS handelt es sich um das Alterungsschutzmittel TMQ der Firma Lanxess AG. Protektor® G3108 ist ein Ozonschutzwachs der Firma Paramelt B.V.. Rhenogran® TBBS-80 ist ein Vulkanisationsbeschleuniger vom Typ TBBS, der 80% Wirkstoff enthält, der Firma Bayer AG.

Bei der Stearinsäure handelt es sich um EDENOR ST1 der Firma Caldic Deutschland GmbH.

Bei dem ZnO handelt es sich um ZnO RS RAL 844 C der Firma Arnsperger Chemikalien GmbH, 50858 Köln, Deutschland Bei dem Vulkanisationsmittel Schwefel handelt es sich um Mahlschwefel 80/90 KMS Laborchemie Handelsgesellsachaft Sankt Augustin, Deutschland.

Bei dem eingesetzten Ruß handelt es sich entweder um den Vergleichsruß 1 (CORAX® N550) oder um den erfindungsgemäßen Ruß "Ruß 1". Der Vergleichsruß 1 ist erhältlich bei Evonik Degussa GmbH.

Die Kautschukmischungen werden in einem Innenmischer entsprechend der Mischvorschrift in Tabelle 4 hergestellt.

Tabelle 4

**Stufe 1**
*Einstellungen*

| | |
|---|---|
| Mischaggregat | Werner und Pfleiderer GK 1,5N |
| Drehzahl | 65 upm |
| Stempeldruck | 5,5 bar |
| Leervolumen | 1,6 l |
| Füllgrad | 0,70 |
| Durchflusstemperatur | 70 °C |
| Friktion | 1:1,11 |
| Batchtemperatur | 145 - 155°C |

(fortgesetzt)

| *Mischvorgang* | |
|---|---|
| 0 bis 1 min | Naturkautschuk |
| 1 bis 2 min | 1/2 Ruß |
| 2 bis 5 min | 1/2 Ruß, Stearinsäure, ZnO, Vulkanox® 4020, Vulkanox® HS Protektor® G3108r, säubern |
| 5 bis 6 min | mischen und ausfahren |
| | |
| Lagerung | 24 h bei Raumtemperatur |

**Stufe 2**

| *Einstellungen* | |
|---|---|
| Mischaggregat | Werner und Pfleiderer GK 1,5N |
| Drehzahl | 50 upm |
| Stempeldruck | 5,5 bar |
| Leervolumen | 1,6 l |
| Füllgrad | 0, 68 |
| Durchflusstemperatur | 60 °C |
| Friktion | 1:1,11 |
| Batchtemperatur | 100 - 110°C |

| *Mischvorgang* | |
|---|---|
| 0 bis 2 min | Batch Stufe 1, Schwefel, Rhenogran®TBBS-80 |
| | |
| 2 min | ausfahren und auf Labormischwalzwerk Troester WNU 1 |
| | (Durchmesser 150 mm, Länge 350 mm, Durchflusstemperatur 40/50°C, UPM 17/21) Fell bilden |
| | Homogenisieren: |
| | 3* links, 3* rechts einschneiden und umklappen sowie 3* bei engem Walzenspalt (3 mm) und 3* bei weitem Walzenspalt (6 mm) stürzen Fell ausziehen. |

In Tabelle 5 sind die Methoden für die Gummitestung zusammengestellt. Diese gelten ebenfalls für die folgenden Beispiele.

Tabelle 5

| Physikalische Testung/Bedingungen | Norm |
|---|---|
| Zugversuch am Ring 1, 23°C<br>　Zugfestigkeit (MPa)<br>　Spannungswert bei 100% Dehnung (MPa)<br>　Spannungswert bei 300% Dehnung (MPa)<br>　Bruchdehnung (%) | DIN 53504, ISO 37 |
| Goodrich-Flexometertest, 0,175 inch Hub, 2 h, 23 °C<br>　Einstichtemperatur (°C) | DIN 53533, ASTM D 623 A |
| Shore Härte, 23°C<br>　Shore A | DIN 53505, ISO7619-1 |
| DIN-Abrieb, 10 N, 23 °C<br>　Abrieb (mm*mm*mm) | DIN ISO 4649 |
| MTS<br>　E* bei 60 °C, 50 $\pm$ 25 N<br>　tan d bei 60 °C, 50 $\pm$ 25 N | DIN 53513, ISO 4664-1 |

(fortgesetzt)

| Physikalische Testung/Bedingungen | Norm |
|---|---|
| E* bei 60 °C, 1 ± 0,5 mm<br>tan d bei 60 °C, 1 ± 0,5 mm | |
| MDR<br>Die Drehmomentanteile S' und S" werden mit dem Gerät RPA 2000 bestimmt.<br>S' bei 60 °C, 1,6 Hz und ±0,5°<br>S" bei 60 °C, 1,6 Hz und ±0,5°<br>tan$\delta$ bei 60 °C, 1,6 Hz und ±0,5° | |
| Elektrischer Widerstand<br>Durchgangs-&Oberflächenwiderstandes werden mit dem Gerät Milli-TO3 bestimmt | |
| Dispersion (Topographie) | DE 19917975 A1 |
| Hochdruckkapillarrheometer<br>Scheinbare Viskosität/Scheinbare Schergeschwindigkeit werden mit dem Hochdruckkapillarrheometer Rheograph 6000 bestimmt | |
| Dichte | DIN 53 479 (Verf. A),<br>ISO 2781 Meth. A |
| Ball Rebound | ASTM D 2632 |
| Druckverformungsrest | DIN 53 533, ASTM D 623 A, ISO 4664-3 |

Die Probenvorbereitung für die Widerstandsmessung stellt sich wie folgt dar:

Mit dem Rundmesser (Ø = 82 mm) werden die Proben aus der 2 mm dicken Vulkanisatplatte ausgestanzt und mit Isopropanol-Alkohol entfettet. Die Dicke des Probekörpers wird mit einem Dickentaster (Ø = 30 mm) auf 0,01 mm genau an mehreren Stellen gemessen. Die mittlere Probendicke wird zur Berechnung des spezifischen Durchgangswiderstandes genommen.

Mit der Ringschablone und einem Silberstift markiert man die mit Leitsilber 200 zu belegenden Stellen. Das Leitsilber wird aufgetragen und nach einer einstündigen Trocknungszeit ist der Probekörper messbereit.

Die Bestimmung des elektrischen Durchgangs- und des elektrischen Oberflächenwiderstandes wird mittels des Gerätes Milli-TO3 der Firma Fischer Elektronik durchgeführt.

Die Scheinbare Viskosität wird mittels des Hochdruckkapillarrheometer Rheograph 6000 der Firma Göttfert, D-74711 Buchen bei einer Temperatur von 100 °C bestimmt.

Die dynamische Scherbeanspruchung zur Messung der Drehmomentanteile S' und S" wird mittels des Gerätes RPA 2000 der Firma Alpha Technologies UK, 74078 Heilbronn durchgeführt.

Die Tabelle 6 zeigt die Ergebnisse der gummitechnischen Prüfung. Die Vulkanisationszeit der Mischungen beträgt 15 Minuten bei 150 °C.

Tabelle 6

| Naturkautschuk-Mischung | | | |
|---|---|---|---|
| | | Mischung 1 | Mischung 2 |
| Ruß (52 phr) | | Vergleichsruß | Ruß 1 |
| Gummitechnische Daten | | | |
| | | | |
| Vulkanisationszeit | min | 15 | 15 |
| Zug-Dehnungs-Eigenschaften | | | |
| Zugfestigkeit | MPa | 20,1 | 19,9 |
| Spannungswert 100% | MPa | 2,7 | 3,2 |
| Spannungswert 300% | MPa | 14,3 | 15,6 |

(fortgesetzt)

| Zug-Dehnungs-Eigenschaften | | | |
|---|---|---|---|
| Bruchdehnung | % | 441 | 414 |
| Shore Härte | Shore A | 62 | 65 |
| DIN Abrieb | mm$^3$ | 103 | 98 |
| Abriebwiderstand-Index | | 100 | 105 |
| Viskoelastische Eigenschaften | | | |
| Goodrich Flexometer | | | |
| Einstichtemperatur | °C | 75 | 75 |
| Rollwiderstand-Index | % | 100 | 100 |
| MTS E * 60°C 50 +/- 25 N | MPa | 8,12 | 9,08 |
| MTS tan δ 60°C 50 +/- 25 N | - | 0,080 | 0,076 |
| MTS E* 60°C 1+/-0,5mm | MPa | 8,07 | 9,06 |
| MTS tan δ 60°C 1+/-0,5mm | - | 0,076 | 0,072 |
| MDR tan δ 60°C | | 0,109 | 0,103 |
| Elektrischer Widerstand | | | |
| Elektrischer Durchgangswiderstand | Ohm cm | 15 400 | 6 700 |
| Elektrischer Oberflächenwiderstand | Ohm | 13 900 | 5 550 |
| Dispersion (Topographie) | % | 1,5 | 1,0 |

Je höher der Wert für den DIN Abrieb (mm$^3$) ist, desto schlechter ist der Abriebwiderstand der Gummimischung. Der Abriebwiderstand-Index wird deshalb für jeden Ruß innerhalb der jeweiligen Rußgruppe wie folgt berechnet:

```
Abriebwiderstand-Index = (DIN-Abrieb des Referenzrußes /
DIN-Abrieb) * 100.
```

Ein Abriebwiderstand-Index > 100 bedeutet deshalb verbesserten Abriebwiderstand, Werte < 100 verschlechterten Abriebwiderstand, relativ zum jeweiligen Referenzruß.

Je höher der Wert für die Einstichtemperatur (°C), desto höher ist die Wärmebildung und damit die Hysterese bei dynamischer Beanspruchung in der Gummimischung und desto schlechter damit der zu erwartende Rollwiderstand.

Rollwiderstand-Index = (Einstichtemperatur des Referenzrußes / Einstichtemperatur) * 100. Ein Rollwiderstand-Index > 100 bedeutet deshalb verbesserten und damit erniedrigten Rollwiderstand, Werte < 100 verschlechterten Rollwiderstand, relativ zum jeweiligen Referenzruß.

Die Ergebnisse der Tabelle 6 zeigen, dass die erfindungsgemäßen Ruße gegenüber dem Vergleichsruß aufgrund der höheren Struktur eine höhere Steifigkeit sowohl im Scherexperiment wie auch im Dehnexperiment aufweist. Hierdurch kann durch Reduzierung des Rußanteils auf das Verstärkungsniveau des Vergleichsrußes die Dichte der Mischung gesenkt werden. Weiterhin ergeben sich aufgrund der höheren Struktur bei gleicher Primärteilchengröße größere Aggregate. Dieses führt letztlich zu einer Absenkung der tan(δ)-Werte. Eine entsprechende Reduktion des Rußanteils auf ein vergleichbares Härteniveau des Vergleichsrußes 1 wird zu einer weiteren Absenkung der tan (δ)-Werte führen.

Beispiel 3 (Gummitechnische Untersuchungen in EPDM):

Die für die EPDM-Mischungen verwendete Rezeptur ist in der folgenden Tabelle 7 angegeben.

Tabelle 7:

|  | Mischung 3 | Mischung 4 | Mischung 5 | Mischung 6 |
|---|---|---|---|---|
| Rußtyp | Vergleichsruß 1 | Ruß 1 | Ruß 1 | Ruß 1 |
|  | phr | phr | phr | phr |
| **Stufe 1** |  |  |  |  |
| BUNA EP G 5455 | 150 | 150 | 150 | 150 |
| Ruß | 130 | 130 | 130 | 130 |
| Stearinsäure | 2,0 | 2,0 | 2,0 | 2,0 |
| ZnO | 5, 0 | 5, 0 | 5, 0 | 5, 0 |
| LIPOXOL 4000 | 2,0 | 2,0 | 2,0 | 2,0 |
| SUNPAR 150 | 50 | 50 | 60 | 70 |
| **Stufe 2** |  |  |  |  |
| Batch Stufe 1 |  |  |  |  |
| Schwefel | 1,50 | 1,50 | 1,50 | 1,50 |
| Vulkacit® Merkapto C | 1,00 | 1,00 | 1,00 | 1,00 |
| Rhenocure TP/S | 2,00 | 2,00 | 2,00 | 2,00 |
| PERKAZIT TBZTD-PDR-D | 1,20 | 1,20 | 1,20 | 1,20 |

Bei LIPOXOL 4000 handelt es sich um Polyethylenglykol mit einem Molekulargewicht von 4000 g/mol der Firma Brenntag GmbH.

Bei dem BUNA EP G 5455 handelt es sich um einen EPDM Kautschuk der Rhein-Chemie GmbH, Deutschland.

Bei SUNPAR 150 handelt es sich um ein paraffinisches Öl der Firma Schill & Seilacher.GmbH

Bei PERKAZIT TBZTD PDR D handelt es sich um ein TBZTD Vulkanisationsbeschleuniger der Firma Weber & Schaer.

Bei der Stearinsäure handelt es sich EDENOR ST1 der Firma Caldic Deutschland GmbH.

Bei dem Vulkanisationsbeschleuniger Vulkacit® Merkapto C handelt es sich um 2-Mercaptobenzothiazol der Firma Rhein-Chemie GmbH.

Bei Rhenocure TP/S handelt es sich um einen Vulkanisationsbeschleuniger der Firma Rhein Chemie GmbH.

Bei dem ZnO handelt es sich um ZnO RS RAL 844 C der Firma Arnsperger Chemikalien GmbH, 50858 Köln, Deutschland

Bei dem Vulkanisationsmittel Schwefel handelt es sich um Mahlschwefel 80/90 KMS Laborchemie Handelsgesellsachaft Sankt Augustin, Deutschland.

Bei dem eingesetzten Ruß handelt es sich entweder um den Vergleichsruß 1 (CORAX® N550) oder um den erfindungsgemäßen Ruß "Ruß 1". Der Vergleichsruß 1 ist erhältlich bei Evonik Degussa GmbH.

Die Kautschukmischungen werden in einem Innenmischer entsprechend der Mischvorschrift in Tabelle 8 hergestellt.

Tabelle 8

**Stufe 1**

*Einstellungen*

| | |
|---|---|
| Mischaggregat | Werner und Pfleiderer GK 1,5N |
| Drehzahl | 80 upm |
| Stempeldruck | 5,5 bar |
| Leervolumen | 1,6 l |
| Füllgrad | 0,80 |
| Durchflusstemperatur | 90°C |
| Friktion | 1:1,11 |

(fortgesetzt)

**Stufe 1**

*Einstellungen*
Batchtemperatur          150 - 160 °C

*Mischvorgang*
0 bis 1 min              Kautschuk
1 bis 3 min              Ruß, Stearinsäure, ZnO, LIPOXOL, SUNPAR 150, säubern
3 bis 4 min              mischen und ausfahren

Lagerung                24 h bei Raumtemperatur

**Stufe 2**

*Einstellungen*
Mischaggregat           Werner und Pfleiderer GK 1,5N
Drehzahl                50 upm
Stempeldruck            5,5 bar
Leervolumen             1,6 l
Füllgrad                0,78
Durchflusstemperatur    70 °C
Friktion                1:1,11
Batchtemperatur         100 - 120 °C

*Mischvorgang*
0 bis 1 min             Batch Stufe 1
1 bis 2 min             Beschleuniger, Schwefel
2 min                   Ausfahren

2 min                   Ausfahren und auf Labormischwalzwerk Troester WNU 1 (Durchmesser 150 mm, Länge 350 mm, Durchflusstemperatur 40/50°C, UPM 17/21)
Fell bilden
Homogenisieren:
3* links, 3* rechts einschneiden und umklappen sowie
6* bei engem Walzenspalt (3 mm) und
6* bei weitem Walzenspalt (6 mm) stürzen
Fell ausziehen.

Batchtemperatur         100 - 120 °C

Die Tabelle 9 zeigt die Ergebnisse der gummitechnischen Prüfung. Die Vulkanisationszeit der Mischungen beträgt 16 Minuten bei 170 °C.

Tabelle 9

| EPDM-Mischung | | | | | |
|---|---|---|---|---|---|
| | | Mischung 3 | Mischung 4 | Mischung 5 | Mischung 6 |
| Ruß (130 phr) | | Vergleichsruß 1 | Ruß 1 | Ruß 1 | Ruß 1 |
| SUNPAR | phr | 50 | 50 | 60 | 70 |
| | | | | | |

(fortgesetzt)

| Gummitechnische Daten | | | | | |
|---|---|---|---|---|---|
| | | | | | |
| Vulkanisationszeit | min | 16 | 16 | 16 | 16 |
| Zug-Dehnungs-Eigenschaften | | | | | |
| Zugfestigkeit | MPa | 11,6 | 12,1 | 12,4 | 11,4 |
| Spannungswert 100% | MPa | 3,4 | 4,2 | 3,8 | 3,1 |
| Spannungswert 300% | MPa | 12,2 | 12,6 | 12,3 | 10,4 |
| Bruchdehnung | % | 327 | 309 | 331 | 367 |
| Shore Härte | Shore A | 64 | 69 | 66 | 63 |
| Hochdruckkapillarrheometer | | | | | |
| Scheinbare Schergeschwindigkeit | 1/s | 66,8 | 67,4 | 72,9 | 95,8 |
| Scheinbare Viskosität | Pas | 3357 | 3326 | 3069 | 2339 |
| Dichte | g/cm$^3$ | 1,097 | 1,095 | 1,090 | 1,078 |
| Viskoelastische Eigenschaften | | | | | |
| Ball Rebound 60 °C | % | 48,3 | 50,8 | 51,0 | 50,8 |
| Druckverformungsrest 22h / 70°C | % | 7,4 | 6,9 | 7,2 | 8,1 |
| MDR S' +- 0,5 °, 1,6 Hz,* 60 °C | dNm | 20,00 | 24,68 | 21,72 | 17,6 |
| MDR S" +- 0,5 °, 1,6 Hz, 60 °C | dNm | 3,65 | 3,94 | 3,32 | 2,79 |
| MDR tan δ +- 0,5 °, 1,6 Hz, 60 °C | - | 0,183 | 0,160 | 0,153 | 0,159 |
| Dispersion (Topographie) | % | 1,6 | 0,3 | 0,1 | 0,6 |

Die Ergebnisse der Tabelle 9 zeigen, dass die erfindungsgemäßen Ruße zu einer höheren Härte, geringeren tan(δ), höheren Ball Rebound, einem geringeren Druckverformungsrest und eine höheren Modul 300, einen höheren S'-Wert und einer deutlich besseren Dispergierung führt. Mit Zugabe des SUNPAR-Öls sinkt das Eigenschaftsprofil ab. Ein ähnliches Eigenschaftsprofil ergibt sich zu der Referenzmischung wenn 60 phr - 70 phr Öl zugegeben werden. Die guten Dispersionseigenschaften bleiben aber dennoch auch für die hohen Ölanteile erhalten. Die Viskosität der unvernetzten Mischung (50 phr SUNPAR-Öl) ist vergleichbar mit der Referenzmischung. Mit steigendem Ölanteil sinkt erwartungsgemäß die Viskosität der Mischung, welches mit einer besseren Verarbeitungseigenschaft einhergeht.

Beispiel 4 (Gummitechnische Untersuchungen in NR/SBR):

Die für die NR/SBR-Mischungen verwendete Rezeptur ist in der folgenden Tabelle 10 angegeben.

Tabelle 10:

| | Mischung 7 | Mischung 8 | Mischung 9 | Mischung 10 | Mischung 11 | Mischung 12 |
|---|---|---|---|---|---|---|
| Rußtyp | Vergleichsruß 1 | Ruß 1 | Ruß 1 | Ruß 1 | Vergleichsruß 2 | Vergleichsruß 2 |
| | phr | phr | phr | phr | phr | phr |
| **Stufe 1** | | | | | | |
| NR RSS 1 ML4 60-70 | 60 | 60 | 60 | 60 | 60 | 60 |
| Krynol 1712 | 55 | 55 | 55 | 55 | 55 | 55 |
| Ruß | 50 | 50 | 47 | 44 | 50 | 58 |
| Stearinsäure | 2,0 | 2,0 | 2,0 | 2,0 | 2,0 | 2,0 |

(fortgesetzt)

| | Mischung 7 | Mischung 8 | Mischung 9 | Mischung 10 | Mischung 11 | Mischung 12 |
|---|---|---|---|---|---|---|
| Rußtyp | Vergleichsruß 1 | Ruß 1 | Ruß 1 | Ruß 1 | Vergleichsruß 2 | Vergleichsruß 2 |
| | phr | phr | phr | phr | phr | phr |
| **Stufe 1** | | | | | | |
| ZnO | 5,0 | 5,0 | 5,0 | 5,0 | 5,0 | 5,0 |
| Vulkanox® 4020/LG | 1 | 1 | 1 | 1 | 1 | 1 |
| Vulkanox® HS/LG | 0,6 | 0,6 | 0,6 | 0,6 | 0,6 | 0,6 |
| **Stufe 2** | | | | | | |
| Batch Stufe 1 | | | | | | |
| Schwefel | 1,60 | 1,60 | 1,60 | 1,60 | 1,60 | 1,60 |
| Vulkaci t® CZ/EG-C | 1,40 | 1,40 | 1,40 | 1,40 | 1,40 | 1,40 |
| Vulkaci t® DM/MG-C | 1,00 | 1,00 | 1,00 | 1,00 | 1,00 | 1,00 |

Bei dem Krynol 1712 handelt es sich um einen SBR Kautschuk der Firma Rhein Chemie.

Bei dem Vulanisationsbeschleuniger Vulkacit® DM/MG-C handelt es sich um das MBTS der Firma Rhein Chemie.

Bei NR RSS 1 handelt es sich um Naturkautschuk, der von der Krahn Chemie erhältlich ist.

Bei Vulkanox HS/LG handelt es sich um das TMQ der Rhein Chemie.

Bei dem Alterungsschutzmittel Vulkanox® 4020/LG handelt es sich um 6PPD der Firma Lanxess AG.

Bei der Stearinsäure handelt es sich um EDENOR ST1 der Firma Caldic Deutschland GmbH.

Bei dem Vulkanisationsbeschleuniger Vulkacit® CZ/EG-C handelt es sich um CBS der Firma Lanxess AG.

Bei dem ZnO handelt es sich um ZnO RS RAL 844 C der Firma Arnsperger Chemikalien GmbH, 50858 Köln, Deutschland

Bei dem Vulkanisationsmittel Schwefel handelt es sich um Mahlschwefel 100 %/Kali Chemie AG, Hannover, Deutschland.

Bei dem eingesetzten Ruß handelt es sich entweder um den Vergleichsruß 1 (CORAX® N550), Vergleichsruß 2 (CORAX® N660) oder um den erfindungsgemäßen Ruß "Ruß 1". Die Vergleichsruße CORAX® N550 und CORAX® N660 sind erhältlich bei Evonik Degussa GmbH.

Die Kautschukmischungen werden in einem Innenmischer entsprechend der Mischvorschrift in Tabelle 11 hergestellt. Die Vulkanisationszeit der Mischungen beträgt 20 Minuten bei 150 °C.

Tabelle 11

**Stufe 0**

*Einstellungen*
Mischaggregat          Werner und Pfleiderer GK 4N
Drehzahl               50 upm
Stempeldruck           5,5 bar
Leervolumen            3,65 l
Füllgrad               0,70
Durchflusstemperatur   50°C
Friktion               1:1,11
Batchtemperatur        140 °C - 160 °C

*Mischvorgang*

NR Kautschuk wird auf ML(1+4)= 60-70 mastiziert

(fortgesetzt)

*Mischvorgang*

Lagerung        24 h bei Raumtemperatur

**Stufe 1**

*Einstellungen*
| | |
|---|---|
| Mischaggregat | Werner und Pfleiderer GK 1,5 E |
| Drehzahl | 60 upm |
| Stempeldruck | 5,5 bar |
| Leervolumen | 1,58 l |
| Füllgrad | 0,55 |
| Durchflusstemperatur | 80°C |
| Friktion | 1:1 |
| Batchtemperatur | 145 °C - 155 °C |

*Mischvorgang*
| | |
|---|---|
| 0 bis 1 min | NR, SBR |
| 1 bis 2 min | ½ Ruß, ZnO, Stearinsäure |
| 2 bis 3 min | ½ Ruß, Vulkanox® 4020/LG, TMQ, säubern |
| 3 bis 4 min | Mischen (auf 150°C) und evtl. Drehzahl regulieren |
| 4 bis 4 min | Lüften |
| 4 bis 5 min | Mischen und ausfahren |

| | |
|---|---|
| Lagerung | 24 h bei Raumtemperatur |

**Stufe 2**

*Einstellungen*
| | |
|---|---|
| Mischaggregat | Werner und Pfleiderer GK 1,5E |
| Drehzahl | 40 upm |
| Stempeldruck | 5,5 bar |
| Leervolumen | 1,58 l |
| Füllgrad | 0,55 |
| Durchflusstemperatur | 50 °C |
| Friktion | 1:1 |
| Batchtemperatur | 90 - 110 °C |

*Mischvorgang*
| | |
|---|---|
| 0 bis 2 min | Batch Stufe 1, Schwefel, Vulkacit® CZ/EG-C,MBTS |
| 2 min | Ausfahren |

und auf Labormischwalzwerk Troester WNU 1 (Durchmesser 150 mm, Länge 350 mm, Durchflusstemperatur 40/50°C, UPM 17/21) Fell bilden
Homogenisieren:
3* bei engem Walzenspalt (3 mm) und
3* bei weitem Walzenspalt (6 mm) stürzen
3* links, 3* rechts einschneiden und umklappen
Fell ausziehen.

Die Tabelle 12 zeigt die Ergebnisse der gummitechnischen Prüfung.

Tabelle 12

| NR/E-SBR-Mischung | | Mischung 7 | Mischung 8 | Mischung 9 | Mischung 10 | Mischung 11 | Mischung 12 |
|---|---|---|---|---|---|---|---|
| | | Vergleichsruß 1 | Ruß 1 | Ruß 1 | Ruß 1 | Vergleichsruß 2 | Vergleichsruß 2 |
| Ruß | phr | 50 | 50 | 47 | 44 | 50 | 58 |
| | | | | | | | |
| Gummitechnische Daten | | | | | | | |
| Vulkanisationszeit | min | 20 | 20 | 20 | 20 | 20 | 20 |
| Zug-Dehnungs-Eigenschaften | | | | | | | |
| Zugfestigkeit | MPa | 13,6 | 13,5 | 8,5 | 12,1 | 12,8 | 13,7 |
| Spannungswert 100% | MPa | 2,3 | 3,0 | 2,6 | 2,4 | 2,1 | 2,4 |
| Spannungswert 300% | MPa | 11,0 | 14,0 | - | 12,2 | 10,4 | 12,0 |
| Bruchdehnung | % | 392 | 318 | 280 | 325 | 386 | 366 |
| Shore Härte | Shore A | 60 | 63 | 61 | 59 | 57 | 60 |
| Dichte | $g/cm^3$ | 1,120 | 1,122 | 1,114 | 1,106 | 1,122 | 1,141 |
| DIN-Abrieb | $mm^3$ | 125 | 113 | 117 | 120 | 133 | 124 |
| Abriebwiderstand-Index | % | 100 | 111 | 107 | 104 | 94 | 101 |
| Goodrich Einstichtemperatur | °C | 81 | 80 | 77 | 75 | 71 | 80 |
| Rollwiderstand-Index | % | 100 | 101 | 105 | 108 | 114 | 101 |
| Viskoelastische Eigenschaften | | | | | | | |
| Ball Rebound 60 °C | % | 69,6 | 72,3 | 73,0 | 74,3 | 73,2 | 70,3 |
| MTS E * 60 °C 50 +/- 25 N | MPa | 7,8 | 8,7 | 8,2 | 7,7 | 6,9 | 7,7 |
| MTS tan $\delta$ 60 °C 50 +/- 25 N | - | 0,092 | 0,080 | 0,074 | 0,068 | 0,074 | 0,086 |
| MTS E* 60°C 1+/-0.5mm | MPa | 7,68 | 8,9 | 8,3 | 7,9 | 6,8 | 7,7 |
| MTS tan $\delta$ 60°C 1+/-0.5mm | - | 0,091 | 0,080 | 0,075 | 0,068 | 0,073 | 0,085 |
| MDR tan $\delta$ 60°C, 0,5°,1,6Hz | - | 0,092 | 0,081 | 0,067 | 0,060 | 0,065 | 0,082 |
| Dispersion (Topographie) | % | 0,5 | 0,5 | 0,4 | 0,3 | 1,7 | 1,2 |

Die Ergebnisse der Tabelle 12 zeigen, dass der erfindungsgemäße Ruße (Ruß 1) in der NR/E-SBR-Mischung (Mischung 8) zu einer höheren Härte, geringeren tan(δ)-Wert bei 60 °C, höheren Ball Rebound, einen höheren Modul 300 und einem höheren komplexen Modul E* führt als in der Vergleichsmischung 7.

Wird der Rußanteil des erfindungsgemäßen Rußes auf 44 phr reduziert (Mischung 10), ergibt sich eine ähnliche Härte und ein ähnlicher komplexer Modul E* wie für die Mischung 7. Der tan(δ) bei 60 °C hingegen ist gegenüber der Referenzmischung 7 deutlich abgesenkt welches zum Beispiel eine Reduzierung des Rollwiderstandes ergibt, wenn die Mischung für den Reifenunterbau Anwendung findet. Wird als Vergleich ein CORAX® N660 herangezogen, der aufgrund seiner niedrigeren spezifischen Oberfläche ebenfalls einen geringen tan(δ)-Wert (60 °C) aufweist (Mischung 7 und Mischung 11) ergibt sich für die gleiche Härte und den gleichen komplexen Modul (Mischung 12) ein höherer tan(δ)-Wert (60 °C) im Vergleich zu der Mischung, die mit dem erfindungsgemäßen Ruß hergestellt wird (Mischung 10).

## Patentansprüche

1. Furnace-Ruß, **dadurch gekennzeichnet, dass** die CTAB-Oberfläche 20 - 49 m$^2$/g, die COAN größer als 90 ml/(100 g) und die Summe aus OAN und COAN größer als 235 ml/(100 g) sind.

2. Furnace-Ruß gemäß Anspruch 1, **dadurch gekennzeichnet, dass** der Mode $D_{St}$ > 6000 m$^2$nm/g /CTAB + 60 nm ist.

3. Furnace-Ruß gemäß der Ansprüche 1 bis 2, **dadurch gekennzeichnet, dass** die Summe aus OAN und COAN größer als 250 ml/(100 g) ist.

4. Furnace-Ruß gemäß der Ansprüche 1 bis 3, **dadurch gekennzeichnet, dass** der massenmittlere Teilchendurchmesser größer als 200 nm ist.

5. Furnace-Ruß gemäß der Ansprüche 1 bis 4, **dadurch gekennzeichnet, dass** das Quartile Ratio größer 1,60 ist.

6. Verfahren zur Herstellung des Furnace-Rußes gemäß Anspruch 1 in einem Furnacerußreaktor, welcher längs der Reaktorachse eine Verbrennungszone, eine Reaktionszone und eine Abbruchzone enthält, durch Erzeugen eines Stromes heißen Abgases in der Verbrennungszone durch Verbrennen eines Brennstoffes in einem Sauerstoff enthaltenden Gas und Leiten des Abgases von der Verbrennungszone, ohne eine Engstelle zu durchströmen, in die Reaktionszone und anschließend in die Abbruchzone, Einmischen eines Rußrohstoffes in das heiße Abgas in der Reaktionszone und Abstoppen der Rußbildung in der Abbruchzone durch Einsprühen von Wasser, **dadurch gekennzeichnet, dass** radial 20-58 Gew.-% des Rußrohstoffes im ersten Drittel der Reaktionszone und die restliche Menge des Rußrohstoffes stromaufwärts an mindestens einer weiteren Stelle in den Reaktor eingedüst wird.

7. Verwendung des Furnace-Rußes nach Anspruch 1 als Füllstoff, Verstärkerfüllstoff, UV-Stabilisator, Leitfähigkeitsruß oder Pigment.

8. Verwendung des Furnace-Rußes nach Anspruch 1 in Kautschuk, Kunststoff, Druckfarben, Tinten, Inkjet-Tinten, Tonern, Lacken, Farben, Papier, Pasten, Batterien, Kosmetika, Bitumen, Beton, Feuerfestmaterialien und anderen Baustoffen.

9. Kautschukmischungen, **dadurch gekennzeichnet, dass** diese mindestens einen Kautschuk und mindestens einen Furnace-Ruß gemäß Anspruch 1 enthalten.

10. Kautschukmischungen nach Anspruch 9, **dadurch gekennzeichnet, dass** der Kautschuk ein Dien-Kautschuk ist.

11. Kautschukmischungen nach Anspruch 10, **dadurch gekennzeichnet, dass** der Dien-Kautschuk ein Natur-, EPDM- oder SBR-Kautschuk ist.

## Claims

1. A furnace black, **characterized in that** the CTAB surface area is from 20 to 49 m$^2$/g, the COAN is greater than 90 ml/(100 g), and the sum of OAN and COAN is greater than 235 ml/(100 g).

2. The furnace black as claimed in claim 1, **characterized in that** the mode Dst is > 6000 m$^2$nm/g /CTAB + 60 nm.

3. The furnace black as claimed in claims 1 to 2, **characterized in that** the sum of OAN and COAN is greater than 250 ml/(100 g).

4. The furnace black as claimed in claims 1 to 3, **characterized in that** the mass-average particle diameter is greater than 200 nm.

5. The furnace black as claimed in claims 1 to 4, **characterized in that** the quartile ratio is greater than 1.60.

6. A process for producing the furnace black as claimed in claim 1 in a furnace-black reactor which comprises, along the reactor axis, a combustion zone, a reaction zone, and a termination zone, via production of a stream of hot exhaust gas in the combustion zone via combustion of a fuel in an oxygen-containing gas and passage of the exhaust gas from the combustion zone without passage through a zone of restricted cross section, and then into the termination zone, mixing to incorporate a feedstock used for the carbon black into the hot exhaust gas in the reaction zone, and termination of carbon-black formation in the termination zone via introduction of water spray, **characterized in that** from 20 to 58% by weight of the feedstock used for the carbon black are introduced through a nozzle radially within the first third of the reaction zone, and the remaining amount of the feedstock used for the carbon black is introduced through a nozzle upstream at at least one further point into the reactor.

7. The use of the furnace black as claimed in claim 1 as reinforcing filler or other filler, UV stabilizer, conductive carbon black, or pigment.

8. The use of the furnace black as claimed in claim 1 in rubber, plastic, printing inks, inkjet inks, other inks, toners, lacquers, paints, paper, pastes, batteries, and in cosmetics, and in bitumen, concrete, fire-retardant materials and other construction materials.

9. Rubber mixtures, **characterized in that** said rubber mixtures comprise at least one rubber and at least one furnace black as claimed in claim 1.

10. Rubber mixtures as claimed in claim 9, **characterized in that** the rubber is a diene rubber.

11. Rubber mixtures as claimed in claim 10, **characterized in that** the diene rubber is a natural rubber, an EPDM rubber, or an SPR rubber.

**Revendications**

1. Noir de carbone de four, **caractérisé en ce que** son aire spécifique CTAB vaut de 20 à 49 m$^2$/g, son indice d'absorption d'huile à l'état comprimé (IAHc) est supérieur à 90 mL/100 g, et la somme de ses indices d'absorption d'huile normal (IAH) et à l'état comprimé (IAHc) est supérieure à 235 mL/100 g.

2. Noir de carbone de four, conforme à la revendication 1, **caractérisé en ce que** le mode $D_{St}$ est supérieur à 6000 m$^2$.nm/g /CTAB + 60 nm.

3. Noir de carbone de four, conforme à l'une des revendications 1 et 2, **caractérisé en ce que** la somme de ses indices IAH et IAHc est supérieure à 250 mL/100 g.

4. Noir de carbone de four, conforme à l'une des revendications 1 à 3, **caractérisé en ce que** le diamètre moyen en masse des particules est supérieur à 200 nm.

5. Noir de carbone de four, conforme à l'une des revendications 1 à 4, **caractérisé en ce que** le rapport de quartiles est supérieur à 1,60.

6. Procédé de fabrication d'un noir de carbone de four conforme à la revendication 1, dans un réacteur à noir de four qui comporte, le long de son axe, une zone de combustion, une zone de réaction et une zone de désagrégation, par production, dans la zone de combustion, d'un courant de gaz chaud par combustion d'un matériau combustible dans un gaz contenant de l'oxygène et transfert de ce gaz de combustion depuis la zone de combustion, sans traversée d'un passage étroit, dans la zone de réaction et ensuite dans la zone de désagrégation, introduction et mélangeage, dans la zone de réaction, d'une matière première pour noir de carbone dans le gaz de combustion chaud, et arrêt, par injection d'eau, de la formation de noir de carbone dans la zone de désagrégation, **caractérisé en ce qu'**on injecte dans le réacteur, radialement, de 20 à 58 % en poids de la matière première pour noir de carbone dans le premier tiers de la zone de réaction, et le reste de la matière première pour noir de carbone en amont, en au moins un autre endroit.

7. Utilisation d'un noir de carbone de four conforme à la revendication 1 en tant que charge, charge renforçante, stabilisant UV, noir conducteur ou pigment.

8. Utilisation d'un noir de carbone de four conforme à la revendication 1 dans du caoutchouc, une matière synthétique, des encres d'imprimerie, des encres, des encres pour appareils à jet d'encre, des toners, des vernis, des couleurs, des papiers, des pâtes, des batteries, des cosmétiques, des bitumes, du béton, des matériaux ignifuges et d'autres matériaux de construction.

9. Mélange de caoutchouc, **caractérisé en ce qu'**il contient au moins un caoutchouc et au moins un noir de carbone de four conforme à la revendication 1.

10. Mélange de caoutchouc conforme à la revendication 9, **caractérisé en ce que** le caoutchouc est un caoutchouc de diène.

11. Mélange de caoutchouc conforme à la revendication 10, **caractérisé en ce que** le caoutchouc de diène est un caoutchouc naturel, un caoutchouc EPDM ou un caoutchouc SBR.

Figur 1

**EP 2 361 954 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080110552 A1
- US 20030013797 A1
- US 005236992 A
- JP 11302557 A
- JP 7268148 A
- JP 4018438 A
- JP 1272645 A
- EP 1783178 A
- DE 19839925 A
- DE 4308488 A
- DE 19917975 A1

**In der Beschreibung aufgeführte Nicht-Patentliteratur**

- **GERSBACHER M.** Carbon Black. Marcel Dekker Inc, 1993, 386
- **FUNT J.M ; SIFLEET W.L. ; TOMME M.** Carbon Black. Marcel Dekker Inc, 1993, 390
- **W. HOFMANN.** Kautschuktechnologie. Genter Verlag, 1980
- **W. HOFMANN.** Rubber Technology Handbook. Hanser Verlag, 1994

23